# EUROPEAN PATENT APPLICATION

(11) **EP 3 848 861 A1**
(43) Date of publication of application: **14.07.2021**
(21) Application number: 19870111.2
(22) Date of filing: 09.10.2019
(51) Int. Cl.: G06Q 10/00

(54) **PLANNING DEVICE, PLANNING METHOD, AND PLANNING PROGRAM**

(30) Priority: 10.10.2018 JP 2018192072; 23.04.2019 JP 2019082193
(71) Applicant: Asahi Kasei Kabushiki Kaisha, Tokyo 1000006 (JP)
(72) Inventor: NAGINO, Goshu, Tokyo 100-0006 (JP)
(74) Representative: dompatent von Kreisler Selting Werner - Partnerschaft von Patent- und Rechtsanwälten mbB
(86) International application number: PCT/JP2019/039858
(87) International publication number: WO 2020/075767

(57) **Abstract**

When a maintenance work is regularly performed on a device, deterioration or the like may be generated in the device before the maintenance work is performed. On the other hand, when a cycle of the maintenance work is shortened, there is a problem of increasing cost due to an extra maintenance work. Provided is a planning device comprising: a status information acquisition unit configured to acquire status information of a target apparatus; a maintenance plan change proposal unit configured to generate a change proposal for a period in which a maintenance work is to be performed by using a maintenance period change model for, based on status information of the target apparatus, outputting a change proposal for a period in which the maintenance work involving at least one of maintenance and replacement of the target apparatus is to be performed; and a change proposal output unit configured to output the change proposal. A planning method and a planning program are also provided.

## Description

### BACKGROUND

### 1. TECHNICAL FIELD

The present invention relates to a planning device, a planning method, and a planning program.

### 2. RELATED ART

In the related art, known is an electrolysis device configured to generate hydrogen by electrolyzing water or an electrolysis device configured to generate chlorine, hydrogen and alkali hydroxide by electrolyzing an aqueous alkali chloride solution. The electrolysis device is regularly subjected to a maintenance work so as to avoid deterioration or failure associated with an operation thereof.

### TECHNICAL PROBLEM

However, when regularly performing the maintenance work on the device, the device may deteriorate or the like before the maintenance work is performed. On the other hand, when a cycle of the maintenance work is shortened, an operating cost of the device increases due to an extra maintenance work.

### GENERAL DISCLOSURE

In order to solve the above problem, a first aspect of the present invention provides a planning device. The planning device may comprise a status information acquisition unit configured to acquire status information of a target apparatus. The planning device may comprise a maintenance plan change proposal unit configured to generate a change proposal for a period in which a maintenance work is to be performed by using a maintenance period change model for, based on the status information of the target apparatus, outputting a change proposal for a period in which the maintenance work involving at least one of maintenance and replacement of the target apparatus is to be performed. The planning device may comprise a change proposal output unit configured to output the change proposal.

The maintenance period change model may also be configured to propose whether the maintenance work scheduled after a predetermined first time period is changed by at least one of postponement and advancement, based on the status information of the target apparatus acquired by the status information acquisition unit. The maintenance plan change proposal unit may also be configured to propose changing a cycle of the maintenance work, on condition that at least one of postponement and advancement of the maintenance work is proposed. The planning device may also comprise a maintenance period change model update unit configured to update the maintenance period change model by learning using training data including the status information of the target apparatus and a target change proposal for a period in which the maintenance work is to be performed. The planning device may also comprise an operating status information acquisition unit configured to acquire operating status information of the target apparatus. The planning device may also comprise an abnormality prediction unit configured to predict an abnormality of the target apparatus by using an abnormality prediction model for predicting abnormality occurrence of the target apparatus based on the operating status information of the target apparatus. The planning device may also comprise a maintenance plan generation unit configured to generate a maintenance plan for the target apparatus, based on the abnormality prediction of the target apparatus generated by the abnormality prediction unit. The planning device may also comprise a maintenance plan output unit configured to output the maintenance plan. The maintenance plan change proposal unit may also be configured to generate a change proposal for a period in which the maintenance work planned in the maintenance plan is to be performed. The planning device may also comprise an abnormality prediction model update unit configured to update the abnormality prediction model by learning using training data including operating status information of the target apparatus and abnormality occurrence status information of the target apparatus. The planning device may also comprise a maintenance plan generation model update unit configured to update a maintenance plan generation model by learning using training data including the abnormality prediction of the target apparatus and an ideal maintenance plan for the target apparatus. The maintenance plan generation unit may also be configured to generate the maintenance plan for the target apparatus by using the maintenance plan generation model. The maintenance plan generation model may also be configured to generate the maintenance plan for the target apparatus, further based on at least one of a skill, performance and placement of a worker who performs the maintenance work. The target apparatus may also include an electrolysis device. The target apparatus may also include a hydrogen generation device configured to generate hydrogen by electrolysis.

In order to solve the above problem, a second aspect of the present invention provides a planning method. A computer may acquire status information of a target apparatus. The computer may generate a change proposal for a period in which a maintenance work is to be performed by using a maintenance period change model for, based on the status information of the target apparatus, outputting a change proposal for a period in which the maintenance work involving at least one of maintenance and replacement of the target apparatus is to be performed. The computer may output the change proposal.

In order to solve the above problem, a third aspect of the present invention provides a planning program. The planning program may be executed by a computer and may be configured to cause the computer to function as a status information acquisition unit configured to acquire status information of a target apparatus. The planning program may be executed by the computer and may be configured to cause the computer to function as a maintenance plan change proposal unit configured to generate a change proposal for a period in which a maintenance work is to be performed by using a maintenance period change model for, based on the status information of the target apparatus, outputting a change proposal for a period in which the maintenance work involving at least one of maintenance and replacement of the target apparatus is to be performed. The planning program may be executed by the computer and may be configured to cause the computer to function as a change proposal output unit configured to output the change proposal.

The summary clause does not necessarily describe all necessary features of the embodiments of the present invention. The present invention may also be a sub-combination of the features described above.

### BRIEF DESCRIPTION OF THE DRAWINGS

FIG. 1 shows a system 10 according to the present embodiment.
FIG. 2 shows an example of a configuration of a planning device 30 according to the present embodiment.
FIG. 3 shows an example of a maintenance plan generation flow of the planning device 30 according to the present embodiment.
FIG. 4 shows an example of a change proposal generation flow of the planning device 30 according to the present embodiment.
FIG. 5 shows an example of a computer 1900 in which a plurality of aspects of the present invention can be entirely or partially embodied.

### DESCRIPTION OF EXEMPLARY EMBODIMENTS

Hereinafter, the present invention will be described through embodiments of the invention. However, the following embodiments do not limit the invention defined in the claims. Also, all combinations of features described in the embodiments are not necessarily essential to solutions of the invention.

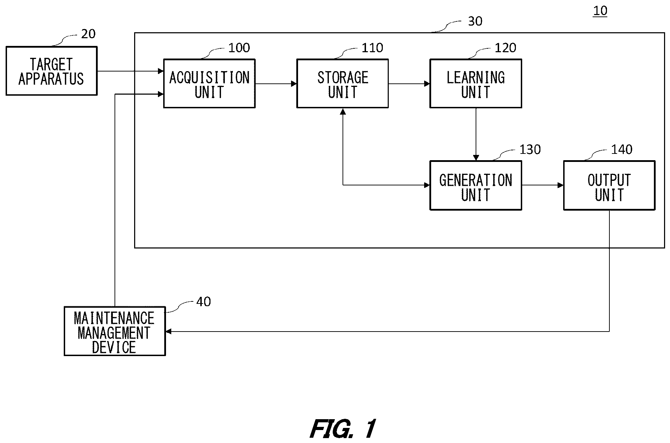

FIG. 1 shows a system 10 according to the present embodiment. The system 10 is configured to generate a maintenance plan, and to change a maintenance work period of the maintenance plan according to status information of a target apparatus 20 under operation. The system 10 includes a target apparatus 20, a maintenance management device 40, and a planning device 30.

The target apparatus 20 is connected to the planning device 30. The target apparatus 20 may be an electrolysis device or a system including the electrolysis device. As an example, the target apparatus 20 is a hydrogen generation device configured to generate hydrogen by electrolysis or a system including the hydrogen generation device. The target apparatus 20 is a hydrogen generation device configured to perform salt electrolysis or alkaline water electrolysis, for example. The hydrogen generation device configured to perform salt electrolysis is, for example, a device including an anode chamber in which an anode is arranged, a cathode chamber in which a cathode is arranged, and a diaphragm such as an ion exchange membrane for partitioning the anode chamber and the cathode chamber, and configured to generate hydrogen by electrolysis in an aqueous solution such as an aqueous alkali chloride solution. The hydrogen generation device configured to perform alkaline water electrolysis is, for example, a device having a diaphragm arranged between an anode and a cathode and configured to generate hydrogen by electrolysis in an electrolytic solution such as an aqueous potassium hydroxide solution, an aqueous sodium hydroxide solution or the like. The target apparatus 20 is subjected to a maintenance work so as to avoid abnormal operations such as decrease in amount of production of a product per unit time, a failure or the like generated along with operations of the target apparatus, for example.

The maintenance management device 40 is connected to the planning device 30. The maintenance management device 40 may be a device possessed by a business operator, a worker or the like who maintains and manages the target apparatus 20. The maintenance management device 40 may be input with information about a status and maintenance of the target apparatus 20 from a worker or the like who performs maintenance.

The planning device 30 is configured to generate and output a maintenance plan for the target apparatus 20, and to change a period in which a maintenance work of the maintenance plan is to be performed, according to status information of the target apparatus 20 under operation. The planning device 30 may also be configured to generate the maintenance plan and a change proposal thereof by using a model generated through machine learning. The planning device 30 may also be configured to output and supply the generated maintenance plan to the maintenance management device 40, and to display the same on a screen or the like of the maintenance management device 40. The planning device 30 may be a computer such as a personal computer, a tablet computer, a smartphone, a workstation, a server computer, a general purpose computer or the like, or may be a computer system to which a plurality of computers are connected. The planning device 30 may be configured to generate the maintenance plan and the change proposal by processing in a CPU, a GPU (Graphics Processing Unit) and/or a TPU (Tensor Processing Unit) of the computer. The planning device 30 may also be configured to execute a variety of processings on a cloud that is provided by the server computer. The planning device 30 comprises an acquisition unit 100, a storage unit 110, a learning unit 120, a generation unit 130, and an output unit 140.

The acquisition unit 100 is connected to the target apparatus 20, the maintenance management device 40 and the storage unit 110, and may be configured to acquire parameters and so on used for learning from the target apparatus 20 and/or the maintenance management device 40. The acquisition unit 100 may also be configured to acquire and update information every predetermined time period. The acquisition unit 100 may also be configured to acquire the information for addition or update every substantially the same or different time period, according to information to be acquired. The acquisition unit 100 is connected to a network or the like, and may be configured to acquire data via the network. In a case where at least a part of data to be acquired is stored in an external database or the like, the acquisition unit 100 may access to the database or the like and acquire the data. The acquisition unit 100 is configured to supply the acquired data to the storage unit 110.

The storage unit 110 is connected to the learning unit 120 and the generation unit 130, and is configured to store the information acquired by the acquisition unit 100 and information generated by the generation unit 130. In the storage unit 110, data that is to be processed in the planning device 30 may also be stored. In the storage unit 110, intermediate data, calculation results, parameters and so on that are calculated (or used) while the planning device 30 generates the maintenance plan and the change proposal may also be stored. The storage unit 110 may also be configured to supply the stored data to a request source, in response to a request of each unit in the planning device 30. As an example, the storage unit 110 supplies the stored data to the learning unit 120, in response to a request of the learning unit 120.

The learning unit 120 is connected to the generation unit 130. The learning unit 120 is configured to generate one or more learning models and to learn and update the learning model. The learning unit 120 may also be configured to learn the generated learning model, based on the training data stored in the storage unit 110. The learning unit 120 may also be configured to execute reinforcement learning to update the learning model. The learning unit 120 is configured to supply the updated learning model to the generation unit 130.

The generation unit 130 is connected to the output unit 140. The generation unit 130 is configured to generate an abnormality prediction, a maintenance plan, and a change proposal for the target apparatus 20, based on the learning model updated by the learning unit 120. The generation unit 130 is configured to supply the generated maintenance plan and change proposal for the target apparatus 20 to the output unit 140. The generation unit 130 may also be configured to store at least one of the generated abnormality prediction, maintenance plan and change proposal in the storage unit 110.

Here, the abnormality prediction for the target apparatus 20 includes a predicted result of an abnormal operation of the target apparatus 20 that will occur in the future. The abnormality prediction may include at least one of an occurrence date of an abnormal operation in the future and a content of the abnormal operation. The abnormality prediction includes, for example, at least one of a probability that an abnormal operation of the target apparatus 20 will occur in one or more future time periods (for example, within predetermined days, within predetermined months or within predetermined years) and a time period in which a probability that an abnormal operation of the target apparatus 20 will occur in the future exceeds a threshold value. The abnormal operation of the target apparatus 20 means that the target apparatus 20 is not in normal operation. The abnormal operation of the target apparatus 20 includes, for example, at least one of a case where an amount of production of a product per unit time of the target apparatus 20 is lowered to a threshold value or less, a case where the target apparatus 20 stops operating due to deterioration, failure and so on of a component of the target apparatus 20, a case where a temperature of the target apparatus 20 exceeds a temperature threshold value to be a high temperature, and a case where a temperature of the target apparatus 20 falls below a temperature threshold value to be a low temperature.

In a case where the target apparatus 20 is the hydrogen generation device configured to perform salt electrolysis, the abnormality prediction of the target apparatus 20 may include at least one of an increase in voltage due to deterioration of the cathode or the anode, a change in voltage due to pinholes in the diaphragm for partitioning the cathode chamber and the anode chamber, a decrease in current efficiency, a decrease in purity of a product, and an increase in voltage and a decrease in current efficiency due to accumulation of impurities in the aqueous solution to the diaphragm, in the hydrogen generation device.

In a case where the target apparatus 20 is the hydrogen generation device configured to perform alkaline water electrolysis, the abnormality prediction for the target apparatus 20 may include at least one of electrode deterioration, short circuit, a decrease in cooling performance, gas leakage, liquid leakage, a defect of a regulation valve, pipe blockage, a defect of a pure water supply valve, leakage of an electrolytic solution, poor supply water purity, diaphragm breakage, deterioration in regulation valve, an increase in temperature of cooling water, a differential pressure abnormality between a pressure of hydrogen generated on the anode-side and a pressure of oxygen generated on the cathode-side, an increase in amount of mist at a rear stage of an electrolytic bath of the hydrogen generation device, and a mist trap defect at the rear stage of the electrolytic bath of the hydrogen generation device, in the hydrogen generation device.

The maintenance plan also includes a future plan for performing a maintenance work on the target apparatus 20. The maintenance plan is to plan at least one of a period in which a maintenance work is to be performed on the target apparatus 20, a content of the maintenance work, a device that is used for the maintenance work, and the number, skills, performance and placement of workers who perform the maintenance work, for example. The maintenance work may also include at least one of maintenance (for example, maintenance, inspection, repair and so on on the target apparatus 20) and replacement of the target apparatus 20 or a component thereof.

The change proposal may also be a proposal for changing a maintenance work period planned in the maintenance plan. The change proposal may also be a proposal for postponement or advancement of the maintenance work period. The change proposal may also be a proposal for changing a cycle of the maintenance work. The change proposal may also be a proposal for changing an implementation period of only some maintenance works of the maintenance works planned in the maintenance plan. The change proposal may also be a proposal for changing content, a worker, a number of workers, placement of workers and so on for the maintenance work planned in the maintenance plan, together with the maintenance work period.

The output unit 140 is connected to the maintenance management device 40, and is configured to output the maintenance plan and change proposal generated in the generation unit 130 to the maintenance management device 40.

According to the planning device 30 of the present embodiment as described above, the maintenance plan for the target apparatus 20 is generated, the status information of the target apparatus 20 is acquired during execution of the maintenance plan, and the maintenance plan can be changed according to the acquired status information. A more specific configuration example of the planning device 30 is subsequently described.

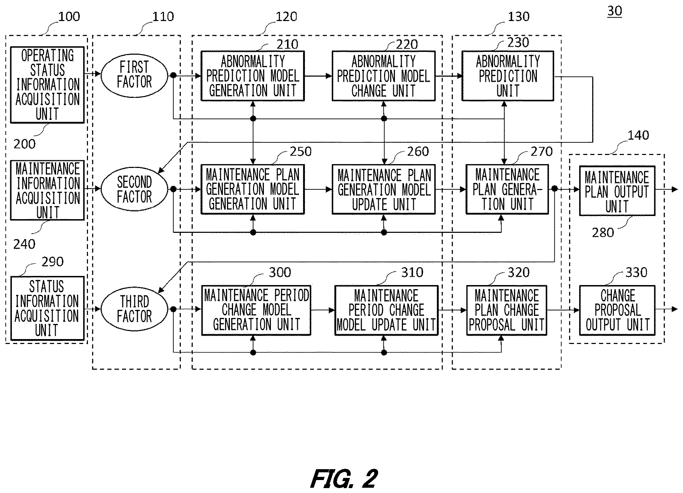

FIG. 2 shows an example of a configuration of the planning device 30 according to the present embodiment. In the planning device 30 of FIG. 2, substantially the same operations as those of the planning device 30 according to the present embodiment shown in FIG. 1 are denoted with the same reference signs, and the descriptions thereof are omitted.

The planning device 30 comprises an operating status information acquisition unit 200, an abnormality prediction model generation unit 210, an abnormality prediction model update unit 220, and an abnormality prediction unit 230, and is configured to predict future abnormality occurrence of the target apparatus 20. The planning device 30 comprises a maintenance information acquisition unit 240, a maintenance plan generation model generation unit 250, a maintenance plan generation model update unit 260, a maintenance plan generation unit 270, and a maintenance plan output unit 280, and is configured to generate and output a future maintenance plan for the target apparatus 20. The planning device 30 comprises a status information acquisition unit 290, a maintenance period change model generation unit 300, a maintenance period change model update unit 310, a maintenance plan change proposal unit 320, and a change proposal output unit 330, and is configured to generate and output a change proposal for the maintenance plan. Here, in the storage unit 110, a first factor, a second factor, and a third factor acquired by the acquisition unit 100 are stored.

The first factor (abnormality prediction factor) may include information affecting abnormality occurrence of the target apparatus 20. The first factor includes operating status information such as an operating rate of the target apparatus 20 before a target time period for abnormality prediction. The first factor may also include a history of abnormal operations of the target apparatus 20 such as deterioration and so on that has occurred in the past. The first factor includes, for example, an occurrence time of an abnormal operation such as deterioration, a repair time period, operating rates of the target apparatus 20 before and after the occurrence time of the abnormal operation, content of the abnormal operation, and so on. The first factor may also include information about a replacement period of a component recommended by a component maker of the target apparatus 20, a component using time period of the target apparatus 20 a time period elapsed after the component is mounted to the target apparatus 20, or the like. The first factor may also include a self-diagnosis result of the target apparatus 20 obtained from a sensor and so on mounted to the target apparatus 20. The first factor may also include a parameter indicative of operating status information of the target apparatus 20, such as production efficiency and so on of the target apparatus 20.

When the target apparatus 20 is the hydrogen generation device configured to perform salt electrolysis, the first factor may also include at least one of a voltage value of the cathode and/or the anode, a change in voltage, current efficiency, and purity of a product in the hydrogen generation device.

When the target apparatus 20 is the hydrogen generation device configured to perform alkaline water electrolysis, the first factor may also include at least one of a voltage value (for example, changes in voltage) of the cathode and/or the anode, a current value, temperature, pressure (pressure of hydrogen generated on the anode-side, pressure of oxygen generated on the cathode-side or differential pressure therebetween), density of an electrolytic solution, purity of a product, a flow rate of the electrolytic solution, instrumentation air pressure, gas temperature, an amount of the electrolytic solution (for example, a tank level or the like) and pH at the rear stage (for example, a water seal, a scrubber or the like) of an electrolytic bath of the hydrogen generation device, in the hydrogen generation device.

As an example, at least one of a voltage value and a current value of an electrode in the hydrogen generation device may be used as a factor for abnormality prediction including at least one of electrode deterioration and short circuit. The temperature of any one configuration of the hydrogen generation device may be used as a factor for abnormality prediction including at least one of electrode deterioration and a decrease in cooling performance. The pressure may be used as a factor for abnormality prediction including at least one of gas leakage, liquid leakage, a defect of a regulation valve and pipe blockage. The density of the electrolytic solution may be used as a factor for abnormality prediction including at least one of poor pure water supply and leakage of the electrolytic solution. The purity of a product may be used as a factor for abnormality prediction including at least one of poor supply water purity and diaphragm breakage. The flow rate of the electrolytic solution may be used as a factor for abnormality prediction including at least one of gas leakage, liquid leakage, a defect of a regulation valve and pipe blockage. The instrumentation air pressure may be used as a factor for abnormality prediction including at least one of pipe blockage and deterioration in regulation valve. The gas temperature may be used as a factor for abnormality prediction including at least one of a decrease in cooling performance and an increase in temperature of cooling water. The amount of the electrolytic solution may be used as a factor for abnormality prediction including at least one of pipe blockage, deterioration in regulation valve and a differential pressure abnormality. pH at the rear stage of the electrolytic bath of the hydrogen generation device may be used as a factor for abnormality prediction including at least one of an increase in amount of mist and trap defect.

The second factor (maintenance prediction factor) may include information about maintenance of the target apparatus 20. The second factor may also include the abnormality prediction generated by the abnormality prediction unit 230. The second factor may also include a past maintenance plan for the target apparatus 20. The second factor may also include information about a worker who can perform a maintenance work on the target apparatus 20, a device that can perform the maintenance work, and arrangement of replacement components and so on of the target apparatus 20. The second factor may also include information about period, a time period and content of the maintenance work performed in the past on the target apparatus 20, a change in operating rate of the target apparatus 20 due to the maintenance work, and so on. The acquisition unit 100 may also be configured to acquire prediction data for predicting an abnormal operation of the target apparatus 20 from an outside, and to store the prediction data in the storage unit 110, as the information of the second factor. In this case, the prediction data may be data for predicting occurrence of a next abnormal operation for a time period equivalent to a time period after the target apparatus 20 operated in the past until an abnormal operation occurred. The prediction data may also be data where a history of an abnormal operation acquired as the same type of a different target apparatus is operated is used as prediction data for the target apparatus 20.

The third factor (status information prediction factor) may include information about status information of the target apparatus 20 received from the target apparatus 20 or the maintenance management device 40. The third factor may also include information about wear, fatigue, degree of deterioration, and so on of a component or the like of the target apparatus 20 according to inspection and maintenance results for the target apparatus 20. The third factor may also include a worker's input during a maintenance work. The third factor may also include information about an amount of production of a product per unit time (production efficiency) of the target apparatus 20 or an operating rate of the target apparatus 20. The third factor may also include a self-diagnosis result of the target apparatus 20 obtained from a sensor and so on mounted to the target apparatus 20. The third factor may also include a value of status information register indicative of status information of the target apparatus 20, or the like. The third factor may also include the maintenance plan generated by the maintenance plan generation unit 270.

When the target apparatus 20 is the hydrogen generation device configured to perform salt electrolysis, the third factor may also include at least one of a voltage value of the cathode and/or the anode, a change in voltage, current efficiency, and purity of a product in the hydrogen generation device.

When the target apparatus 20 is the hydrogen generation device configured to perform alkaline water electrolysis, the third factor may also include at least one of a voltage value (for example, changes in voltage or the like) of the cathode and/or the anode, a current value, temperature, pressure (a pressure of hydrogen generated on the anode-side, a pressure of oxygen generated on the cathode-side or a differential pressure therebetween), density of an electrolytic solution, purity of a product, a flow rate of the electrolytic solution, instrumentation air pressure, gas temperature, an amount of the electrolytic solution (for example, a tank level or the like) and pH of a water seal or a scrubber at the rear stage of an electrolytic bath of the hydrogen generation device, in the hydrogen generation device.

The information of the first factor, the second factor, and the third factor may be time-series information every substantially constant time. The information of the first factor, the second factor, and the third factor may be each added or updated over time. For example, the information of the first factor, the second factor, and the third factor may include information supplied from an external device or the like.

The operating status information acquisition unit 200 is connected to the storage unit 110, and is configured to acquire operating status information (first factor) of the target apparatus 20 and to store the same in the storage unit 110. The operating status information acquisition unit 200 may also be configured to acquire the operating status information from the target apparatus 20 or a database of a maker of the target apparatus 20.

The abnormality prediction model generation unit 210 is connected to the abnormality prediction model update unit 220. The abnormality prediction model generation unit 210 is configured to generate an abnormality prediction model for predicting abnormality occurrence of the target apparatus 20 based on the operating status information of the target apparatus 20. The abnormality prediction model generation unit 210 may also be configured to generate the abnormality prediction model by processing referred to as pre-learning, offline learning or the like using information more past than a target time period to be predicted. The abnormality prediction model generation unit 210 is configured to generate the abnormality prediction model by using a regression analysis, a Bayesian inference, a neural network, a Gaussian mixed model, a hidden Markov model and so on, for example. When a model having LSTM (Long short-term memory), RNN (Recurrent Neural Network), and other memories is used as the abnormality prediction model, for example, an abnormal operation can be predicted from time-series of the first factor. The abnormality prediction model generation unit 210 is configured to supply the generated abnormality prediction model to the abnormality prediction model update unit 220.

The abnormality prediction model update unit 220 is connected to the abnormality prediction unit 230. The abnormality prediction model update unit 220 is configured to update the abnormality prediction model by learning using training data including the operating status information of the target apparatus 20 and abnormality occurrence status information of the target apparatus 20. The abnormality prediction model update unit 220 may also be configured to update the abnormality prediction model by learning, based on a value of the first factor in a past time period and an abnormality occurrence status that has actually occurred after the past time period, for example. The abnormality prediction model update unit 220 may also be configured to update the abnormality prediction model to a new abnormality prediction model by learning every predetermined first update time period or every abnormality occurrence that has actually occurred, for example. Alternatively, the abnormality prediction model update unit 220 may also be configured to update the abnormality prediction model according to various conditions such as a condition that learning has been performed only by a predetermined number of times or a condition that an error difference due to learning falls below a predetermined threshold value.

The abnormality prediction model update unit 220 may be configured to learn the abnormality prediction model by processing referred to as adaptive learning or online learning. The abnormality prediction model update unit 220 is configured to learn the abnormality prediction model by executing reinforcement learning using any machine learning model as an identification model, for example. By performing the machine learning, the abnormality prediction model update unit 220 can predict an abnormal operation corresponding to the first factor by using the first factor as input, with accuracy corresponding to a model to be applied.

The abnormality prediction model update unit 220 is preferably configured to perform learning by further using information that is later in time than the information of the first factor used for generating the abnormality prediction model by the abnormality prediction model generation unit 210. The abnormality prediction model update unit 220 is configured to learn the abnormality prediction model by using the information of the first factor updated by the abnormal operation that has actually occurred. The abnormality prediction model update unit 220 may also be configured to execute learning of the abnormality prediction model as the information of the first factor has been updated. The abnormality prediction model update unit 220 may also be configured to execute learning for one or more times during a first update time period. The abnormality prediction model update unit 220 is configured to supply the updated abnormality prediction model to the abnormality prediction unit 230.

The abnormality prediction unit 230 is connected to the storage unit 110. The abnormality prediction unit 230 is configured to predict the abnormality of the target apparatus 20 by using the abnormality prediction model. The abnormality prediction unit 230 is configured to predict occurrence of the abnormal operation of the target apparatus 20 in a predetermined time period in the future every predetermined time period, for example. The abnormality prediction unit 230 is configured to predict occurrence of the abnormal operations by using the abnormality prediction model and the information of the first factor. The abnormality prediction unit 230 is configured to predict the abnormal operations of the target apparatus 20 by applying, to the abnormality prediction model, the information of the first factor in a time period immediately before a time period in which an abnormal operation should be predicted, for example. The abnormality prediction unit 230 is configured to supply a prediction result to the storage unit 110 for storing the prediction result, as the second factor. The abnormality prediction unit 230 may also be configured to directly supply the prediction result to the maintenance plan generation unit 270.

The maintenance information acquisition unit 240 is connected to the storage unit 110 and is configured to acquire information (that is the second factor) about the maintenance of the target apparatus 20. The maintenance information acquisition unit 240 may also be configured to acquire the maintenance status information from the target apparatus 20 or a database of a business operator or the like who maintains the target apparatus 20. The maintenance information acquisition unit 240 is configured to acquire the information about the maintenance of the target apparatus 20 and to store the same in the storage unit 110.

The maintenance plan generation model generation unit 250 is connected to the maintenance plan generation model update unit 260. The maintenance plan generation model generation unit 250 may be configured to generate a maintenance plan generation model based on the first factor and the second factor. The maintenance plan generation model may be a model for generating a maintenance plan for the target apparatus 20 by learning, based on at least one of the abnormality prediction of the target apparatus 20 and a skill, performance and placement of a worker who performs the maintenance work. The maintenance plan generation model generation unit 250 may also be configured to generate the maintenance plan generation model by learning processing referred to as pre-learning, offline learning or the like using the past information.

The maintenance plan generation model generation unit 250 is configured to generate the maintenance plan generation model by executing reinforcement learning using any machine learning model such as a regression analysis, a Bayesian inference, a neural network, a Gaussian mixed model, a hidden Markov model or the like, as an identification model. When a model having LSTM, RNN, and other memories is used as the maintenance plan generation model, for example, the maintenance plan or the like for the target apparatus 20 can be predicted from time-series of the second factor. The maintenance plan generation model generation unit 250 is configured to supply the generated maintenance plan generation model to the maintenance plan generation model update unit 260.

The maintenance plan generation model update unit 260 is connected to the maintenance plan generation unit 270. The maintenance plan generation model update unit 260 is configured to update the maintenance plan generation model by learning using training data including the abnormality prediction of the target apparatus 20 and an ideal maintenance plan for the target apparatus 20. Here, the ideal maintenance plan for the target apparatus 20 may be an ideal maintenance plan derived from past actual data. As an example, in a case where an abnormal operation of the target apparatus 20 occurs before the maintenance work in a time period set according to the abnormality prediction of the target apparatus 20 in the past time period, the ideal maintenance plan for the target apparatus 20 is a maintenance plan where the day before or several days before the occurrence of the abnormal operation is set as the maintenance work period. The maintenance plan generation model update unit 260 may also be configured to update the maintenance plan generation model by learning further using another second factor.

The maintenance plan generation model update unit 260 may also be configured to update the maintenance plan generation model to a new learned maintenance plan generation model every predetermined second update time period, for example. Alternatively, the maintenance plan generation model update unit 260 may also be configured to update the maintenance plan generation model according to various conditions such as a condition that learning has been performed by only a predetermined number of times or a condition that an error difference due to learning falls below a predetermined threshold value.

The maintenance plan generation model update unit 260 may also be configured to learn the maintenance plan generation model by processing referred to as adaptive learning or online learning. The maintenance plan generation model update unit 260 is configured to learn the maintenance plan generation model by executing reinforcement learning using any machine learning model as an identification model, for example. By performing the machine learning, the maintenance plan generation model update unit 260 can predict a value corresponding to the second factor by using the second factor as input, with accuracy corresponding to a model to be applied.

The maintenance plan generation model update unit 260 is preferably configured to perform learning by further using information that is later in time than the information used for generating the maintenance plan generation model by the maintenance plan generation model generation unit 250. For example, the maintenance plan generation model update unit 260 is configured to learn the maintenance plan generation model by using the information of the second factor updated by the actual maintenance work or the like on the target apparatus 20.

The maintenance plan generation model update unit 260 may also be configured to execute learning of the maintenance plan generation model in response to the information of the second factor being updated. The maintenance plan generation model update unit 260 may also be configured to execute learning for one or more times during a second update time period. The maintenance plan generation model update unit 260 is configured to supply the updated maintenance plan generation model to the maintenance plan generation unit 270.

The maintenance plan generation unit 270 is connected to the maintenance plan output unit 280. The maintenance plan generation unit 270 is configured to generate a maintenance plan for the target apparatus 20, based on the abnormality prediction of the target apparatus 20 generated by the abnormality prediction unit 230. The maintenance plan generation unit 270 may also be configured to generate the maintenance plan for the target apparatus 20 by using the maintenance plan generation model. The maintenance plan generation unit 270 may also be configured to generate the maintenance plan for the target apparatus 20 in a target time period, based on a value of the second factor including the abnormality prediction of the target apparatus 20 in the target time period.

The maintenance plan generation unit 270 is configured to generate the maintenance plan in a predetermined time period in the future every predetermined time period, for example. The maintenance plan generation unit 270 is configured to generate the maintenance plan by applying, to the maintenance plan generation model, the information of the second factor in a time period immediately before a predetermined time period in the future starts, for example. The maintenance plan generation unit 270 is configured to generate the maintenance plan in a time period such as several days or ten and several days, one week or several weeks, one month or several months and one year or several years. The maintenance plan generation unit 270 is configured to generate the maintenance plan of N days, for example. The maintenance plan generation unit 270 is configured to supply the generated maintenance plan to the maintenance plan output unit 280. The maintenance plan generation unit 270 may also be configured to supply the generated maintenance plan to the storage unit 110 for storing the maintenance plan, as a third factor.

The maintenance plan output unit 280 is connected to the target apparatus 20. The maintenance plan output unit 280 is configured to output the maintenance plan generated in the maintenance plan generation unit 270 to the maintenance management device 40.

The status information acquisition unit 290 is connected to the storage unit 110 and is configured to acquire status information (that is the third factor) of the target apparatus 20. The status information acquisition unit 290 may also be configured to acquire the status information of the target apparatus 20 from the target apparatus 20 or a database of a business operator or the like who maintains the target apparatus 20. The status information acquisition unit 290 is configured to acquire the information about the status information of the target apparatus 20 and to store the information in the storage unit 110, as the third factor.

The maintenance period change model generation unit 300 is connected to the maintenance period change model update unit 310. The maintenance period change model generation unit 300 is configured to generate the maintenance period change model, based on the third factor. The maintenance period change model may be a model for outputting, based on the status information of the target apparatus 20, a change proposal for a period in which a maintenance work involving at least one of maintenance and replacement of the target apparatus 20 is to be performed by learning. The maintenance period change model is a model for proposing whether a maintenance work scheduled after a predetermined first time period is changed by at least one of postponement and advancement, based on the status information of the target apparatus 20 acquired by the status information acquisition unit 290, for example.

The maintenance period change model generation unit 300 may also be configured to generate the maintenance period change model by learning processing referred to as pre-learning, offline learning or the like using past information. The maintenance period change model generation unit 300 is configured to generate the maintenance period change model by executing reinforcement learning using any machine learning model such as a regression analysis, a Bayesian inference, a neural network, a Gaussian mixed model, a hidden Markov model and so on, as an identification model. When a model having LSTM, RNN, and other memories is used as the maintenance period change model, for example, the maintenance period for the target apparatus 20 can also be predicted from time-series of the third factor. The maintenance period change model generation unit 300 is configured to supply the generated maintenance period change model to the maintenance period change model update unit 310.

The maintenance period change model update unit 310 is connected to the maintenance plan change proposal unit 320. The maintenance period change model update unit 310 is configured to update the maintenance period change model by learning using the training data including the status information of the target apparatus 20 and a target change proposal for a period in which a maintenance work is to be performed. Here, the target change proposal for a period in which a maintenance work is to be performed may be an ideal change proposal derived from past actual data. As an example, in a case where the abnormal operation of the target apparatus 20 occurred in the past before a maintenance work period changed by the change proposal generated according to the status information of the target apparatus 20, the target change proposal is a change proposal for changing the maintenance work period to the day before or several days before the occurrence of the abnormal operation. When it is determined by a worker or the like that the maintenance work at a period changed by the change proposal generated according to the status information of the target apparatus 20 was unnecessary in the past because deterioration of the target apparatus 20 was small, the target change proposal is a change proposal for changing the maintenance work period to a day (for example, after one day or several days) after the changed period. The target change proposal may be derived from at least one of the first factor, the second factor, and the third factor.

The maintenance period change model update unit 310 may also be configured to update the maintenance period change model to a new learned maintenance period change model every predetermined third update time period, for example. Alternatively, the maintenance period change model update unit 310 may also be configured to update the maintenance period change model according to various conditions such as a condition that learning has been performed by a predetermined number of times or a condition that an error difference due to learning falls below a predetermined threshold value.

The maintenance period change model update unit 310 may also be configured to learn the maintenance period change model by processing referred to as adaptive learning or online learning. The maintenance period change model update unit 310 is configured to learn the maintenance period change model by executing reinforcement learning using any machine learning model as an identification model, for example. By performing the machine learning, the maintenance period change model update unit 310 can predict a value corresponding to the third factor by using the third factor as input, with accuracy corresponding to a model to be applied.

The maintenance period change model update unit 310 is preferably configured to perform learning by further using information that is later in time than the information of the third factor used for generation of the maintenance period change model by the maintenance period change model generation unit 300. The maintenance period change model update unit 310 is configured to learn the maintenance period change model by using the information of the third factor updated by the actual maintenance work or the like on the target apparatus 20.

The maintenance period change model update unit 310 may also be configured to execute learning the maintenance period change model in response to the information of the third factor being updated. The maintenance period change model update unit 310 is configured to execute learning for one or more times during the third update time period of the maintenance period change model update unit 310. The maintenance period change model update unit 310 is configured to supply the updated maintenance period change model to the maintenance plan change proposal unit 320.

The maintenance plan change proposal unit 320 is connected to the change proposal output unit 330. The maintenance plan change proposal unit 320 is configured to generate a change proposal for a period in which a maintenance work on the target apparatus 20 is to be performed, by using the maintenance period change model. The maintenance plan change proposal unit 320 may also be configured to propose changing a cycle of the maintenance work, on condition that at least one of postponement and advancement of the maintenance work is proposed. The maintenance plan change proposal unit 320 may also be configured to generate the change proposal for the maintenance work period, based on the value of the third factor stored in the storage unit 110.

The maintenance plan change proposal unit 320 is configured to generate the change proposal in a predetermined time period in the future every predetermined time period, for example. The maintenance plan change proposal unit 320 is configured to generate the change proposal by applying, to the maintenance period change model, the information of the third factor in a time period immediately before a predetermined time period in the future starts, for example. The maintenance plan change proposal unit 320 may also be configured to generate a plurality of change proposals for changing a plurality of maintenance work periods in the maintenance plan. The maintenance plan change proposal unit 320 is configured to output the generated change proposal to the change proposal output unit 330.

The change proposal output unit 330 is connected to the target apparatus 20. The change proposal output unit 330 is configured to output the change proposal generated in the maintenance plan change proposal unit 320 to the maintenance management device 40.

The above planning device 30 according to the present embodiment is configured to generate the maintenance plan for the target apparatus 20 by using the model generated by learning, and changes the maintenance work period of the maintenance plan according to the current status of the target apparatus 20. The operations of the planning device 30 are subsequently described.

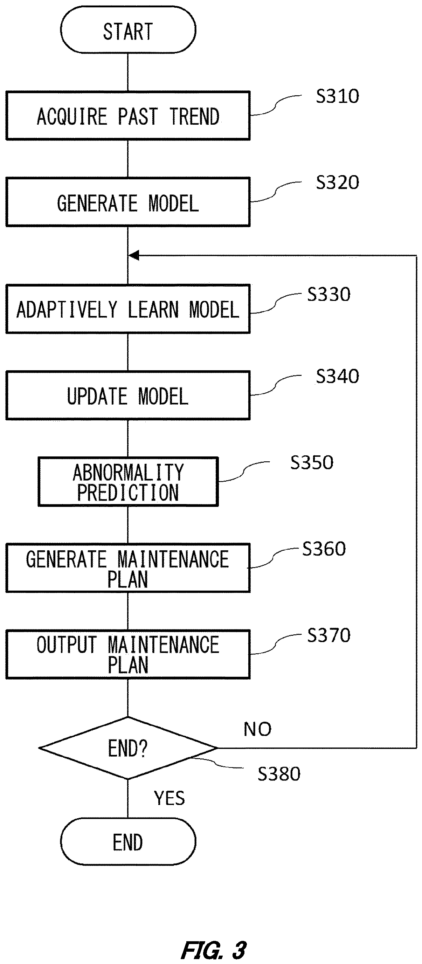

FIG. 3 shows an example of a maintenance plan generation flow of the planning device 30 according to the present embodiment.

The acquisition unit 100 is configured to acquire the information of the first factor and the second factor becoming a past trend about the operating status of the target apparatus 20 and the maintenance of the target apparatus 20 (S310). The acquisition unit 100 is configured to acquire the information of the first factor and the second factor from time t0 to t1, for example. The acquisition unit 100 is configured to store the acquired information of the first factor and the second factor in the storage unit 110. The acquisition unit 100 may also directly supply the information of the first factor and the second factor to the learning unit 120 and the generation unit 130.

Then, the learning unit 120 is configured to generate the learning model (S320). The learning unit 120 is configured to generate the learning model, based on the values of the first factor and the second factor for the time period from time t0 to time t1. For example, the abnormality prediction model generation unit 210 is configured to generate the abnormality prediction model by using the value of the first factor for the time period from time t0 to time t1. The maintenance plan generation model generation unit 250 is configured to generate the maintenance plan generation model by using the value of the second factor for the time period from time t0 to time t1.

The abnormality prediction model generation unit 210 and the maintenance plan generation model generation unit 250 may also be configured to generate the maintenance plan generation model and the abnormality prediction model by using, as prediction data, virtual data based on a physical model of the target apparatus 20 and comparing the prediction data and actual data acquired in the past operation of the target apparatus 20. For example, the abnormality prediction model generation unit 210 and the maintenance plan generation model generation unit 250 are configured to generate a model by executing reinforcement learning so that an error between the prediction data and target data derived from the past actual data is to be a minimum error (for example, 0) or to be smaller than a predetermined value.

The abnormality prediction model generation unit 210 and the maintenance plan generation model generation unit 250 are configured to set a time period of M days in the time period from time t0 to time t1, as a virtual prediction time period, for example. Note that, the M days may be a time period such as several days or ten and several days or one week or several weeks, for example. Then, the abnormality prediction model generation unit 210 and the maintenance plan generation model generation unit 250 are configured to execute reinforcement learning so that an error between a prediction result in a prediction time period based on the values of the first factor and the second factor in a time period earlier than the prediction time period in the time period from time t0 to time t1 and the actual data or virtual data in the prediction time period is to be the smallest.

Note that, the generation of the learning model by the learning unit 120 may also be executed before the planning device 30 acquires the actual data of the target apparatus 20 as the target apparatus 20 operates.

Then, the learning unit 120 is configured to adaptively learn the generated learning model (S330). Here, the acquisition unit 100 may also further acquire the information of the first factor and the second factor. The acquisition unit 100 is configured to acquire the information of the first factor and the second factor from time t2 to time t3, for example. Note that, the time period from time t2 to time t3 is a time period after the time period from time t0 to time t1. The learning unit 120 may also be configured to perform adaptive learning by using the information of the first factor and the second factor newly acquired by the acquisition unit 100.

For example, the abnormality prediction model update unit 220 is configured to adaptively learn the abnormality prediction model, based on the value of the first factor. The abnormality prediction model update unit 220 may be configured to adaptively learn the abnormality prediction model by using at least one of the operating status of the target apparatus 20 and the abnormality occurrence status of the target apparatus 20 in the time period from time t2 to time t3. The abnormality prediction model update unit 220 may also be configured to perform reinforcement learning so that a prediction result of the abnormal operation of the target apparatus 20 obtained by using the abnormality prediction model in the time period from time t2 to time t3 coincides with the acquired operating status information or abnormality occurrence status information of the target apparatus 20 in the time period from time t2 to time t3.

The abnormality prediction model update unit 220 is configured to set a time period of M days in the time period from time t2 to time t3, as the virtual prediction time period, for example. Note that, the M days may be a time period such as several days or ten and several days, one week or several weeks, one month or several months and one year or several years, for example. The abnormality prediction model update unit 220 is configured to perform reinforcement learning so that an error between a prediction result in a prediction time period based on the value of the first factor in a time period earlier than the prediction time period in the time period from time t2 to time t3 and the actual data in the prediction time period is to be the smallest (for example, 0) or to be smaller than a predetermined value.

The maintenance plan generation model update unit 260 may also be configured to adaptively learn the maintenance plan generation model based on the first factor and the second factor. For example, the maintenance plan generation model update unit 260 may be configured to learn the maintenance plan generation model by using training data including the abnormality prediction of the target apparatus 20 and the ideal maintenance plan for the target apparatus 20 in the time period from time t2 to time t3. The maintenance plan generation model update unit 260 may be configured to execute reinforcement learning so that an error between a prediction result of a maintenance status (for example, the maintenance work period or the like) of the target apparatus 20 obtained by using the maintenance plan generation model in the time period from time t2 to time t3 and the acquired actual data (or a target value derived from the actual data) in the time period from time t2 to time t3 is to be the smallest (for example, 0) or to be smaller than a predetermined value.

The maintenance plan generation model update unit 260 is configured to set a time period of M days in the time period from time t2 to time t3, as the virtual prediction time period, for example. Note that, the M days may be a time period such as several days or ten and several days, one week or several weeks, one month or several months and one year or several years, for example. The maintenance plan generation model update unit 260 is configured to perform reinforcement learning so that an error between a prediction result of the maintenance status in the prediction time period based on the values of the first factor and the second factor in a time period earlier than the prediction time period in the time period from time t2 to time t3 and the actual data (or a target value derived from the actual data) in the prediction time period is to be the smallest (for example, 0) or to be smaller than a predetermined value.

Then, the learning unit 120 is configured to update the learning model (S340). The learning unit 120 may update the learning model every predetermined time. For example, the learning unit 120 is configured to continue the adaptive learning for an initial update time period necessary for the update after the adaptive learning starts, to execute the initial update of the learning model, and then to repeat the update every certain time period. Here, the initial update time period is preferably equal to or longer than N days, which is a time period planned in the maintenance plan to be generated (or a time period from an output of the maintenance plan to an initial maintenance work). The certain time period during which the update is repeated may be several hours, ten and several hours, one day, several tens of hours, several days or the like.

For example, the abnormality prediction model update unit 220 is configured to update the abnormality prediction model every first update time period after the initial update time period. The maintenance plan generation model update unit 260 is also configured to update the maintenance plan generation model every second update time period after the initial update time period. The first update time period and the second update time period are one day, one month or one year, for example.

Then, the abnormality prediction unit 230 is configured to predict the abnormality of the target apparatus 20 by using the updated abnormality prediction model (S350). For example, the abnormality prediction unit 230 is configured to predict occurrence of the abnormal operations of the target apparatus 20 in a time period from time t4 to time t5 by using the updated abnormality prediction model and the value of the first factor. Note that, the time period from time t4 to time t5 is a time period after the time period from time t2 to time t3, and may be a future time period of a prediction point of time. The abnormality prediction unit 230 is configured to predict abnormality occurrence in N days after the initial update time period by applying the value of the first factor of N days acquired by the acquisition unit 100 for the initial update time period to the abnormality prediction model, for example. The abnormality prediction unit 230 may be configured to supply the generated abnormality prediction to the storage unit 110, and to store the same in the storage unit 110, as the second factor.

Then, the maintenance plan generation unit 270 generates the maintenance plan for the target apparatus 20 by using the updated learning model (S360). The maintenance plan generation unit 270 may generate the maintenance plan in the time period from time t4 to time t5 by applying the value of the second factor including the abnormality prediction generated by the abnormality prediction unit 230 to the updated maintenance plan generation model. The maintenance plan generation unit 270 generates the maintenance plan of N days after the initial update time period by applying the value of the second factor of N days acquired by the acquisition unit 100 for the initial update time period to the maintenance plan generation model, for example.

The maintenance plan generation unit 270 may also generate the maintenance plan in the time period from time t4 to time t5 so that the maintenance work is to be performed in a day before the point of time at which occurrence of an abnormal operation is predicted in the abnormality prediction generated by the abnormality prediction unit 230. The maintenance plan generation unit 270 may also generate the maintenance plan in which at least one of a content of the maintenance work, workers, skills of workers, the number of workers, a time period of the maintenance work and a component to be replaced is set according to a type or scale of an abnormal operation predicted in the abnormality prediction.

The maintenance plan generation unit 270 may also generate the maintenance plan for each of the multiple target apparatuses 20. The maintenance plan generation unit 270 may generate each of the maintenance plans that are substantially the same, when the multiple target apparatuses 20 are substantially the same. The maintenance plan generation unit 270 may also generate the different maintenance plans according to each of the different types of target apparatuses 20, the target apparatuses 20 purchased at different period, the target apparatuses 20 of different manufacturing makers or the multiple target apparatuses 20 including combinations thereof.

In this case, the maintenance plan generation model generation unit 250 may generate each of the plurality of maintenance plan generation models for each of the multiple target apparatuses 20 or for each of the combinations of the target apparatuses 20. The maintenance plan generation model update unit 260 may also learn and update each of the plurality of maintenance plan generation models.

The output unit 140 outputs the maintenance plan generated by the maintenance plan generation unit 270 (S370). Thereby, a business operator and so on who perform the maintenance work can perform the maintenance work on the target apparatus 20 according to the maintenance plan received by the maintenance management device 40.

When the planning device 30 continues to generate the maintenance plan after the output of the maintenance plan or after the time period from time t4 to time t5 elapses (S380: No), the processing returns to S330, and the learning unit 120 adaptively learns the learning model. In this case, the acquisition unit 100 sequentially acquires the information of the first factor and the second factor that change due to the operation of the target apparatus 20, in the time period from timet4 to time t5, and sequentially stores the information in the storage unit 110. That is, the planning device 30 includes the information in the time period from time t4 to time t5 in the past information, and sets, as the target time period to be predicted, a time period after the time period from time t4 to time t5.

The planning device 30 repeats the adaptive learning of the model, updates the model according to the elapse of the predetermined time period, and generates and outputs the maintenance plan. In this way, the planning device 30 according to the present embodiment can continue to output the maintenance plan for the target apparatus 20 while updating the learning model by repeating the generation of the maintenance plan for a target time period of the target apparatus 20, and the operation and maintenance in the target time period.

In the operation flow of the planning device 30, the example where the planning device 30 is operated in time series in order of times t0 to t5 has been described. Here, each time period may be a time period that is continuous in time.

The planning device 30 according to the present embodiment can predict an abnormal operation of the target apparatus 20 by learning, and prepare an appropriate maintenance plan. Subsequently, the generation of the change proposal for changing the maintenance plan for the target apparatus 20 is described.

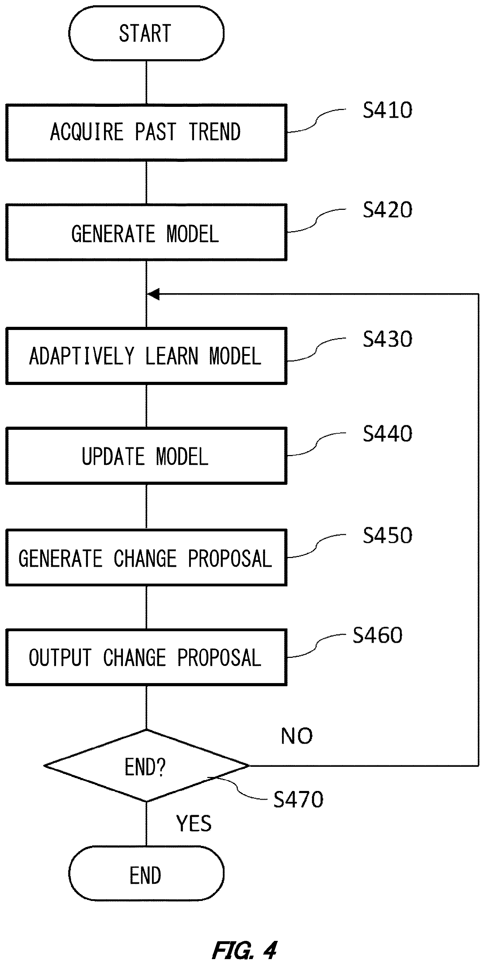

FIG. 4 shows an example of a change proposal generation flow of the planning device 30 according to the present embodiment.

The acquisition unit 100 acquires the information of the third factor becoming a past trend about the status of the target apparatus 20 (S410). The acquisition unit 100 acquires the information of the third factor from time t10 to time t11, for example. The acquisition unit 100 stores the acquired information of the third factor in the storage unit 110. The acquisition unit 100 may also directly supply the information of the third factor to the learning unit 120 and the generation unit 130.

Then, the maintenance period change model generation unit 300 generates the maintenance period change model (S420). The maintenance period change model generation unit 300 generates the learning model, based on the value of the third factor in the time period from time t10 to time t11.

The maintenance period change model generation unit 300 may also generate the maintenance period change model by setting, as prediction data, virtual data based on a physical model of the target apparatus 20 and comparing the prediction data and the actual data acquired in the past operation of the target apparatus 20. For example, the maintenance period change model generation unit 300 generates a model by executing reinforcement learning so that an error between the prediction data and target data derived from the past actual data is to be a minimum error (for example, 0) or to be smaller than a predetermined value.

The maintenance period change model generation unit 300 sets a time period of M days in the time period from time t10 to time t11, as the virtual prediction time period, for example. Note that, the M days may be a time period such as several days or ten and several days, one week or several weeks, and one year or several years, for example. The maintenance period change model generation unit 300 performs reinforcement learning so that an error between a prediction result in a prediction time period based on the value of the third factor in a time period earlier than the prediction time period in the time period from time t10 to time t11 and the actual data in the prediction time period is to be smallest.

Then, the maintenance period change model update unit 310 adaptively learns the generated maintenance period change model (S430). Here, the acquisition unit 100 may also further acquire the information of the third factor. The acquisition unit 100 acquires the information of the third factor from time t12 to time t13, for example. Note that, the time period from time t12 to time t13 is set to a time period after the time period from time t10 to time t11. The maintenance period change model update unit 310 may also perform adaptive learning by using the information of the third factor newly acquired by the acquisition unit 100.

For example, the maintenance period change model update unit 310 may learn the maintenance period change model by using training data including the status information of the target apparatus 20 and the target change proposal for the maintenance work period acquired in the time period from time t12 to time t13. The maintenance period change model update unit 310 may execute reinforcement learning so that an error between a prediction result of a maintenance work period on the target apparatus 20 obtained by using the maintenance period change model in the time period from time t12 to time t13 and the acquired actual data (or a target value derived from the actual data) in the time period from time t12 to time t13 is to be smallest (for example, 0) or to be smaller than a predetermined value.

The maintenance period change model update unit 310 sets a time period of M days in the time period from time t12 to time t13, as the virtual prediction time period, for example. Note that, the M days may be a time period such as several days or ten and several days, one week or several weeks, one month or several months and one year or several years, for example. The maintenance period change model update unit 310 performs reinforcement learning so that an error between a prediction result of a maintenance work period in a prediction time period based on the value of the third factor in a time period earlier than the prediction time period in the time period from time t12 to time t13 and the actual data (or a target value derived from the actual data) in the prediction time period is to be smallest (for example, 0) or to be smaller than a predetermined value.

Then, the maintenance period change model update unit 310 updates the maintenance period change model (S440). The maintenance period change model update unit 310 may update the maintenance period change model every predetermined time. For example, the maintenance period change model update unit 310 continues the adaptive learning for an initial update time period necessary for update after the adaptive learning starts, executes initial update of the learning model, and then repeats the update every predetermined time period. Here, the initial update time period is preferably equal to or longer than N days, which is a time period from the generation of the maintenance plan to an initial maintenance work of the maintenance plan. The predetermined time period every which the update is repeated may be several hours, ten and several hours, one day, several tens of hours, several days or the like.

For example, the maintenance period change model update unit 310 updates the maintenance period change model every third update time period after the initial update time period. The first update time period, the second update time period, and the third update time period may be different time periods or may be substantially the same time period. The third update time period is one day, one month or one year, for example.

Then, the maintenance plan change proposal unit 320 generates a change proposal for a period in which the maintenance work planned in the maintenance plan for the target apparatus 20 is to be performed, by using the updated maintenance period change model (S460). The maintenance plan change proposal unit 320 may generate the change proposal for the maintenance work period scheduled at time t14 after the predetermined first time period by applying, to the updated maintenance period change model, the status information of the target apparatus 20 for a time period from time t12 to time t13, the status information of the target apparatus 20 for a time period from the previous maintenance work to the present and/or the status information of the target apparatus 20 at present included in the third factor. For example, time t14 may be a time period after the time period from time t12 to time t13.

The maintenance plan change proposal unit 320 may also generate the change proposal during the continuous maintenance work in the maintenance plan. The maintenance plan change proposal unit 320 may also generate the change proposal for a latest maintenance work period in the maintenance plan.

When it is predicted that an abnormal operation occurs in the target apparatus 20 before scheduled maintenance work time 14, for example, the maintenance plan change proposal unit 320 may generate the change proposal for advancing the maintenance work of the maintenance plan so that the maintenance work is to be performed on a day before the predicted abnormality occurrence time or time t14. When it is predicted that an abnormal operation occurs in the target apparatus 20 after time 14, for example, the maintenance plan change proposal unit 320 may generate the change proposal for postponing the maintenance work of the maintenance plan so that the maintenance work is to be performed on a day before the predicted abnormality occurrence time and after time t14.

The change proposal output unit 330 outputs the change proposal generated by the maintenance plan change proposal unit 320 (S370). Thereby, a business operator who has the target apparatus 20 or a business operator who performs the maintenance work on the target apparatus 20 can perform a maintenance work on the target apparatus 20 according to the maintenance plan changed by the change proposal.

When the planning device 30 continues to generate an additional change proposal after outputting the change proposal (S470: No), the processing returns to S430, and the learning unit 120 adaptively learns the learning model. In this case, the acquisition unit 100 acquires the information of the third factor that changes due to the operation of the target apparatus 20, and stores the information in the storage unit 110.

The planning device 30 of the present embodiment can change the maintenance plan for the target apparatus 20, which is maintained according to the maintenance plan, according to the current status of the target apparatus 20, and avoid occurrence of an abnormal operation and extra maintenance to reduce the operating cost of the target apparatus 20.

Note that, the planning device 30 may not comprise at least one of the operating status information acquisition unit 200, the abnormality prediction model generation unit 210, the abnormality prediction model update unit 220, the abnormality prediction unit 230, the maintenance information acquisition unit 240, the maintenance plan generation model generation unit 250, the maintenance plan generation model update unit 260, the maintenance plan generation unit 270, and the maintenance plan output unit 280. In this case, the planning device 30 may generate the change proposal for changing a maintenance work period, for a maintenance plan input from an outside such as a maker or the like of the target apparatus 20 or for a predetermined maintenance plan.

The abnormality prediction model generation unit 210, the abnormality prediction model update unit 220, the abnormality prediction unit 230, the maintenance plan generation model generation unit 250, the maintenance plan generation model update unit 260, the maintenance plan generation unit 270, the maintenance period change model generation unit 300, the maintenance period change model update unit 310, and the maintenance plan change proposal unit 320 can use all of the first factor, the second factor, and the third factor stored in the storage unit 110 so as to generate a model, to update a model, to generate an abnormality prediction, to generate a maintenance plan, to generate a change proposal, and the like.

The planning device 30 may also be configured to output and display a plan and a change proposal on a screen of the planning device 30 without outputting the plan and the change proposal to the maintenance management device 40.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical operations, flip-flops, registers, memory elements such as field-programmable gate arrays (FPGA), programmable logic arrays (PLA), and the like.

Computer-readable media may include any tangible device that can store instructions for execution by a suitable device, such that the computer-readable medium having instructions stored thereon comprises an article of manufacture including instructions which can be executed to create means for performing operations specified in the flowcharts or block diagrams. Examples of computer-readable media may include an electronic storage medium, a magnetic storage medium, an optical storage medium, an electromagnetic storage medium, a semiconductor storage medium, and the like. More specific examples of computer-readable media may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a BLU-RAY (registered trademark) disc, a memory stick, an integrated circuit card, etc.

Computer-readable instructions may include assembler instructions, instruction-set-architecture (ISA) instructions, machine instructions, machine dependent instructions, microcode, firmware instructions, status-setting data, or either source code or object code written in any combination of one or more programming languages, including an object oriented programming language such as Smalltalk, JAVA(registered trademark), C++, etc., and conventional procedural programming languages, such as Python and the "C" programming language or similar programming languages.

Computer-readable instructions may be provided to a processor of a general purpose computer, a special purpose computer, or other programmable data processing apparatus, or to programmable circuitry, locally or via a local area network (LAN), wide area network (WAN) such as the Internet, etc., and the computer-readable instructions may be executed to create means for performing operations specified in the flowcharts or block diagrams. Examples of the processor include a computer processor, a processing unit, a microprocessor, a digital signal processor, a controller, a microcontroller, and the like.

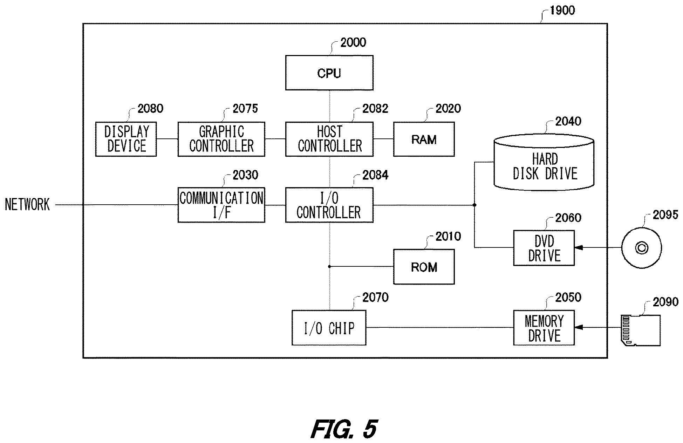

FIG. 5 shows an example of a computer 1900 in which a plurality of aspects of the present invention can be entirely or partially embodied. A program that is installed in the computer 1900 can cause the computer 1900 to function as one or more "sections" in an operation or an apparatus associated with the embodiment of the present invention, or cause the computer 1900 to perform the operation or the one or more sections thereof, and/or cause the computer 1900 to perform processes of the embodiment of the present invention or steps thereof. Such a program may be performed by a CPU 2000 so as to cause the computer 1900 to perform certain operations associated with some or all of the blocks of flowcharts and block diagrams described herein.

The computer 1900 according to the present embodiment includes CPU peripheral units having a CPU 2000, a RAM 2020, a graphic controller 2075, and a display device 2080, which are mutually connected by a host controller 2082, input/output units having a communication interface 2030, a hard disk drive 2040, and a DVD drive 2060, which are connected to the host controller 2082 by an input/output controller 2084, and legacy input/output units having a ROM 2010, a flash memory drive 2050 and an input/output chip 2070, which are connected to the input/output controller 2084.

The host controller 2082 is configured to connect the RAM 2020, the CPU 2000 configured to access the RAM 2020 at a high transfer rate, and the graphic controller 2075. The CPU 2000 is configured to operate, based on programs stored in the ROM 2010 and the RAM 2020, thereby controlling each unit. The graphic controller 2075 is configured to acquire image data, which is generated by the CPU 2000 and so on on a frame buffer provided in the RAM 2020, and to cause the image data to be displayed on the display device 2080. Alternatively, the graphic controller 2075 may also include therein the frame buffer in which the image data generated by the CPU 2000 and so on is stored.

The input/output controller 2084 is configured to connect the host controller 2082, and the communication interface 2030, the hard disk drive 2040 and the DVD drive 2060, which are relatively high-speed input/output devices. The communication interface 2030 is configured to perform communication with other devices via a wired or wireless network. The communication interface also functions as hardware for performing communication. The hard disk drive 2040 is configured to store programs and data, which are used by the CPU 2000 within the computer 1900. The DVD drive 2060 is configured to read programs or data from a DVD 2095, and to provide the same to the hard disk drive 2040 via the RAM 2020.

Also, the input/output controller 2084 is connected to the relatively low-speed input/output devices of the ROM 2010, the flexible disk drive 2050 and the input/output chip 2070. The ROM 2010 is configured to store a boot program that is performed by the computer 1900 at the time of activation, and/or a program depending on the hardware of the computer 1900. The flash memory drive 2050 is configured to read programs or data from a flash memory 2090, and to provide the same to the hard disk drive 2040 via the RAM 2020. The input/output chip 2070 is configured to connect the flash memory drive 2050 to the input/output controller 2084, and to connect a variety of input/output devices to the input/output controller 2084 via a parallel port, a serial port, a keyboard port, a mouse port and the like, for example.

The program that is provided to the hard disk drive 2040 via the RAM 2020 is provided by a user with being stored in a recording medium such as the flash memory 2090, the DVD 2095 or an IC card. The program is read from the recording medium, is installed in the hard disk drive 2040 within the computer 1900 via the RAM 2020, and is executed by the CPU 2000. The information processing described in these programs is read into the computer 1900, resulting in cooperation between a program and the above-mentioned various types of hardware resources. An apparatus or method may be constituted by realizing the operation or processing of information in accordance with the usage of the computer 1900.

For example, when communication is performed between the computer 1900 and an external device, the CPU 2000 may perform a communication program loaded onto the RAM 2020 to instruct communication processing to the communication interface 2030, based on the processing described in the communication program. The communication interface 2030, under control of the CPU 2000, reads transmission data stored on a transmission buffer region provided on a storage medium such as the RAM 2020, the hard disk drive 2040, the flash memory 2090, the DVD 2095 or the like, and transmits the read transmission data to a network or writes reception data received from a network into a reception buffer region or the like provided on the storage medium. In this way, the communication interface 2030 may transfer the transmission and reception data with the storage device by a direct memory access (DMA) manner. Alternatively, the CPU 2000 may read data from the storage device or communication interface 2030 of a transmission source, and write the data to the communication interface 2030 or storage device of a transmission destination, thereby transferring the transmission and reception data.

In addition, the CPU 2000 is configured to cause all or a necessary portion of a file or a database, which has been stored in an external storage device such as the hard disk drive 2040, the DVD drive 2060 (DVD 2095), the flash memory drive 2050 (flash memory 2090) and the like, to be read into the RAM 2020 by the DMA transfer or the like, thereby performing various types of processing on the data on the RAM 2020. The CPU 2000 is configured to write back the processed data to the external storage device by the DMA transfer or the like. In the processing, the RAM 2020 can be regarded as temporarily holding contents of the external storage device. Therefore, in the present embodiment, the RAM 2020 and the external storage device are collectively referred to as a memory, a storage unit or a storage device.

In the present embodiment, various types of information, such as various types of programs, data, tables, and databases, may be stored in the storage device to undergo information processing. Note that, the CPU 2000 may be configured to hold a portion of the RAM 2020 in a cache memory, and to perform reading and writing on the cache memory. Also in this aspect, since the cache memory serves as a portion of the functions of the RAM 2020, the cache memory is also included in the RAM 2020, the memory and/or the storage device in the present embodiment, unless otherwise indicated.

The CPU 2000 is also configured to perform various types of processing on the data read from the RAM 2020, which includes various types of operations, processing of information, condition judging, search/replacement of information and so on described in the present embodiment and is designated by an instruction sequence of programs, and writes the result back to the RAM 2020. For example, when performing condition judging, the CPU 2000 judges whether various types of variables described in the present embodiment satisfy a condition, which indicates that the variables are larger, smaller, equal or larger, equal or smaller, or equal, as compared to the other variables or constants, and when the condition is satisfied (or is not satisfied), the CPU is branched to a different instruction sequence or calls a subroutine.

In addition, the CPU 2000 may search for information in a file, a database, and the like, in the storage device. For example, when a plurality of entries, each having an attribute value of a first attribute associated with an attribute value of a second attribute, is stored in the storage device, the CPU 2000 may search for an entry matching the condition whose attribute value of the first attribute is designated, from the plurality of entries stored in the storage device, and read the attribute value of the second attribute stored in the entry, thereby obtaining the attribute value of the second attribute associated with the first attribute satisfying the predetermined condition.

When a plurality of elements is described in the description of the embodiment, an element except the described elements may also be used. For example, in the description "X executes Y by using A, B and C", X may execute Y by using D, in addition to A, B and C.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: system; 20: target apparatus; 30: planning device; 40: maintenance management device; 100: acquisition unit; 110: storage unit; 120: learning unit; 130: generation unit; 140: output unit; 200: operating status information acquisition unit; 210: abnormality prediction model generation unit; 220: abnormality prediction model update unit; 230: abnormality prediction unit; 240: maintenance information acquisition unit; 250: maintenance plan generation model generation unit; 260: maintenance plan generation model update unit; 270: maintenance plan generation unit; 280: maintenance plan output unit; 290: status information acquisition unit; 300: maintenance period change model generation unit; 310: maintenance period change model update unit; 320: maintenance plan change proposal unit; 330: change proposal output unit; 1900: computer; 2000: CPU; 2010: ROM; 2020: RAM; 2030: communication interface; 2040: hard disk drive; 2050: flash memory drive; 2060: DVD drive; 2070: input/output chip; 2075: graphic controller; 2080: display device; 2082: host controller; 2084: input/output controller; 2090: flash memory; 2095: DVD

## Claims

1. A planning device comprising:
a status information acquisition unit configured to acquire status information of a target apparatus;
a maintenance plan change proposal unit configured to generate a change proposal for a period at which a maintenance work is to be performed by using a maintenance period change model for, based on status information of the target apparatus, outputting a change proposal for a period in which the maintenance work involving at least one of maintenance and replacement of the target apparatus is to be performed; and
a change proposal output unit configured to output the change proposal.

2. The planning device according to Claim 1, wherein:
the maintenance period change model is configured to propose whether the maintenance work scheduled after a predetermined first time period is changed by at least one of postponement and advancement, based on status information of the target apparatus acquired by the status information acquisition unit.

3. The planning device according to Claim 2, wherein
the maintenance plan change proposal unit is configured to propose changing a cycle of the maintenance work, on condition that at least one of postponement and advancement of the maintenance work is proposed.

4. The planning device according to any one of Claims 1 to 3, further comprising:
a maintenance period change model update unit configured to update the maintenance period change model by learning using training data including status information of the target apparatus and a target change proposal for a period in which the maintenance work is to be performed.

5. The planning device according to any one of Claims 1 to 4, further comprising:
an operating status information acquisition unit configured to acquire operating status information of the target apparatus;
an abnormality prediction unit configured to predict an abnormality of the target apparatus by using an abnormality prediction model for predicting abnormality occurrence of the target apparatus based on operating status information of the target apparatus;
a maintenance plan generation unit configured to generate a maintenance plan for the target apparatus, based on an abnormality prediction of the target apparatus generated by the abnormality prediction unit; and
a maintenance plan output unit configured to output the maintenance plan.

6. The planning device according to Claim 5, wherein
the maintenance plan change proposal unit is configured to generate a change proposal for a period in which the maintenance work planned in the maintenance plan is to be performed.

7. The planning device according to Claim 5 or 6, further comprising:
an abnormality prediction model update unit configured to update the abnormality prediction model by learning using training data including operating status information of the target apparatus and abnormality occurrence status information of the target apparatus.

8. The planning device according to any one of Claims 5 to 7, further comprising:
a maintenance plan generation model update unit configured to update a maintenance plan generation model by learning using training data including an abnormality prediction of the target apparatus and an ideal maintenance plan for the target apparatus, wherein
the maintenance plan generation unit is configured to generate a maintenance plan for the target apparatus by using the maintenance plan generation model.

9. The planning device according to Claim 8, wherein
the maintenance plan generation model is configured to generate a maintenance plan for the target apparatus, further based on at least one of a skill, performance and _placement of a worker who performs the maintenance work.

10. The planning device according to any one of Claims 1 to 9, wherein
the target apparatus includes an electrolysis device.

11. The planning device according to any one of Claims 1 to 10, wherein
the target apparatus includes a hydrogen generation device configured to generate hydrogen by electrolysis.

12. A planning method comprising:
a computer acquiring status information of a target apparatus;
the computer generating a change proposal for a period in which a maintenance work is to be performed by using a maintenance period change model for, based on status information of the target apparatus, outputting a change proposal for a period in which the maintenance work involving at least one of maintenance and replacement of the target apparatus is to be performed; and
the computer outputting the change proposal.

13. A planning program to be executed by a computer, the planning program being for causing the computer to function as:
a status information acquisition unit configured to acquire status information of a target apparatus;
a maintenance plan change proposal unit configured to generate a change proposal for a period in which a maintenance work is to be performed by using a maintenance period change model for, based on status information of the target apparatus, outputting a change proposal for a period in which the maintenance work involving at least one of maintenance and replacement of the target apparatus is to be performed; and
a change proposal output unit configured to output the change proposal.
